# EUROPÄISCHE PATENTSCHRIFT

(11) **EP 1 035 146 B1**
(45) Veröffentlichungstag und Bekanntmachung des Hinweises auf die Patenterteilung: **08.09.2004**
(21) Anmeldenummer: 00103382.8
(22) Anmeldetag: 23.02.2000
(51) Int. Cl.: C08G 18/66, C08G 18/40, C08G 18/48

(54) **Die Verwendung von hydrophilen Polyester-Polyurethan-Schaumstoffen bei der Herstellung von Verbundstoffen für die Fahrzeuginnenausstattung**
The use of hydrophylic polyester-polyurethane-foams in the preparation of laminates for car interior fittings
Utilisation de mousses de polyuréthane-polyester hydrophiliques pour la préparation de laminés pour équipement d'intérieur de l'automobile

(30) Priorität: 06.03.1999 DE 19909978
(43) Veröffentlichungstag der Anmeldung: 13.09.2000
(73) Patentinhaber: Bayer MaterialScience AG, 51368 Leverkusen (DE)
(72) Erfinder: Herzog, Klaus-Peter, 51371 Leverkusen (DE); Baatz, Günther, Dr., 51503 Rösrath (DE)

(56) Entgegenhaltungen:
- EP-A- 0 903 360
- GB-A- 1 326 161
- US-A- 5 650 450

## Beschreibung

Die Erfindung beschreibt die Verwendung hydrophiler Polyester-Polyurethan-Schaumstoffe bei der Herstellung flammkaschierter Textil-Schaumstoff-Verbundstoffe.

Eine wesentliche Anwendung von Polyester-Polyurethan-Schaumstoffen betrifft die Aufspaltung von Blockschaumstoff-Langblöcken zu Bahnenware und deren Weiterverarbeitung zu Verbundstoffen für Innenausstattungsteile nach Kaschierung mit Textilien oder Folien.

Unter Verbundstoffen für den Fahrzeugausbau werden Textil-kaschierte PUR-Schaumstoffe wie z.B. Sitz- oder Rückenpolsterauflagen verstanden.

Vornehmlich Textil-kaschierte Bahnenware bildet hierbei die oberste Polsterschicht, welche nach Zuschneiden und Vernähen zur Sitz- bzw. Lehnenauflage und durch anschließendes Verpolstern (bislang meist von Hand) mit dem Rest der Sitz- oder Lehnenkonstruktion zum fertigen Einbauteil umgesetzt wird.

Neben dem Verpolstern von Hand existiert auch eine Technik zur Hintcrschäumung vorgefertigter Sitz- und Lehnenauflagen bzw. weiterer Polsterteile wie z.B. Kopfstützen oder Armlehnen in einer Schäumform mit aufwendiger Verfahrenstechnik.

Hierdurch ergeben sich allerdings neben Fertigungsvorteilen auch spezifische Nachteile für das Sitzklima "besessener" Teile wie Sitz- und Lehnenauflage durch die verfahrenstechnisch nötige Aufkaschierung vakuumdichter (und damit meist diffusionshemmender) Folien auf der Rückseite der Textil-kaschierten Bahnenware oder zumindest den Einsatz von besonders Luft- undurchlässig eingestellter Bahnenware zur Kaschierung.

Bei ausreichender Dicke der erfindungsgemäß einzusetzenden Bahnenware lässt sich indessen auch dieser Nachteil teilweise kompensieren durch das Feuchteabsorptionsvermögen der in der Sandwichkaschierung (Textil-Oberseite bis Folien-Rückseite) verbleibenden Schaumstoffschicht.

Bei Sandwichkaschierungen für das übliche Verpolstern von Hand indessen wird die Rückseite der Bahn lediglich mit einem weitmaschigen und Diffusions-offenen Gewirke kaschiert.

Als Verbindetechnik für Weichschaumstoff-Bahnenware und Textilien bzw. Folien hat sich neben Klebekaschierung insbesondere die Flammkaschierung als preiswerte und effiziente Methode bewährt.

In einem kontinuierlichen Verfahren werden hierbei Schaumstoff-Bahnen bei Arbeitsgeschwindigkeiten im Bereich von 15 bis 40 m/min. mit z.B. Textil-Bahnenware verbunden. Durch Beflammung mit einem Gasflammenbalken wird hierbei der Schaumstoff unmittelbar vor Zuführung der Textilbahn oberflächlich angeschmolzen. Neben Schmelzvorgängen an der PUR-Matrix treten auf der Oberfläche auch Abbaureaktionen auf. Textil- und Schaumstoffbahn werden unmittelbar nach Zusammenführung zwischen mitlaufenden Walzenpaaren der Flammkaschieranlage verpresst. Nach dem Verpressen muss die auf der Schaumstoff-Oberfläche entstandene Schmelze relativ zügig abbinden.

Bislang sind diese Anforderungen durch Ester-PUR-Schaumstoffe wesentlich besser zu erfüllen als durch Ether-PUR-Schaumstoffe, da letztere im Kaschierprozess eine deutlich dünnflüssigere Schmelze bilden. Diese Schmelze zeigt beim Abkühlen zudem einen bemerkenswert verzögerten Viskositätsaufbau, was im Kaschierprozess zu deutlich verringerter Schälfestigkeit führt.

Indessen besitzen Ether-PUR-Schaumstoffe andererseits Eigenschaften, die sie als Polstermaterialien eigentlich prädestinieren - z.B. eine wesentlich höhere Luftdurchlässigkeit bei vergleichbarer Rohdichte und deutlich höhere Elastizität.

Ester-PUR-Schaumstoffe mit ihrem vergleichsweise ausgeprägten Thermoplastcharakter - und damit besserer Flammkaschierfähigkeit -, welche darüber hinaus ein bemerkenswertes Feuchteabsorptionsvermögen besitzen, lassen im einen wie im anderen Falle der Verpolsterung zusätzlich ein besseres Sitzklima und dadurch erhöhten Sitzkomfort erwarten.

Polyether- wie Polyester-PUR-Weichschaumstoffe werden vorzugsweise im Einstufen ("one shot")-Verfahren hergestellt. Einzelheiten über Chemie und Verfahrenstechnik hierzu enthält z.B. das Kunststoff-Handbuch, Band VII, Carl Hanser-Verlag, München/Wien, 3. Auflage (1993) auf den Seiten 193-220. Hierbei entstehen Block-schaumstoffe (zur Weiterverarbeitung), die selbst bei großer Offenzelligkeit nur ungenügende hydrophile Eigenschaften besitzen. Es hat deshalb nicht an Versuchen gefehlt, durch Nachbehandeln der Schaumstoffmatrix oder durch Mitverschäumen der verschiedenartigsten Zusatzmittel dieses Verhalten zu verbessern (vgl. DE-A 2 207 356, DE-A 2 207 361) mit erheblichem Aufwand und mäßigem Erfolg.

Aufgabe der vorliegenden Erfindung war es daher, Polyurethan-Schaumstoffe mit guten hydrophilen Eigenschaften zur Verfügung zu stellen, die sich zur Herstellung flammkaschierter Textil-Schaumstoff-Verbundstoffen eignen.

Überraschenderweise wurde gefunden, dass Polyester-PUR-Schaumstoffe. die mit Polyolmischungen hergestellt wurden, in denen ein Teil der Polyesterpolyole durch Polyether-Polyole mit einem Ethoxylierungsgrad über 30 % ersetzt war, diese Aufgabe besonders gut lösen.

Gegenstand der Erfindung ist somit die Verwendung hydrophiler Polyester-PUR-Schaumstoffe, aus der Umsetzung von
a) Polyisocyanaten mit
b) mindestens zwei Hydroxylgruppen aufweisenden Polyesterpolyolen mit einem mittleren Molekulargewicht im Bereich von 700 bis 10 000 und
c) mindestens zwei Hydroxylgruppen aufweisenden ethoxylierten Polyetherpolyolen mit einem Ethoxylierungsgrad von über 30 Gew.-% und einer Funktionalität im Bereich von 2 bis 6 und
d) gegebenenfalls mindestens zwei aktive Wasserstoffatome aufweisende Verbindungen mit einem mittleren Molekulargewicht im Bereich von 32 bis 700 sowie
e) Katalysatoren, Wasser und/oder Treibmitteln und
f) gegebenenfalls Hilfs- und Zusatzstoffen
in Kombination mit linearen Glykolen und/oder Phosphor-haltigen Verbindungen als Zusatzmittel bei der Herstellung flammkaschierter Textil-Schaumstoff-Verbundstoffe.

Der Ethoxylierungsgrad der eingesetzten Polyetherpolyole liegt über 30 Gew.-%, bevorzugt zwischen 50 und 95 Gew.-%. Üblicherweise werden Trimethylolpropan und/oder Glycerin-gestartete, bevorzugt Glycerin-gestartete hochethoxylierte Polyetherpolyole, wie beispielsweise VP PU41WB01 (Bayer AG, trifunktionell) eingesetzt.

Üblicherweise liegt der Gehalt der hochethoxylierten Polyetherpolyole im Polyolgemisch zwischen 2 bis 50 Gew.-%, bezogen auf die Summe der Komponenten b) bis d).

Geeignete Polyesterpolyole sind herstellbar aus organischen Dicarbonsäuren mit 2 bis 12 Kohlenstoffatomen und mehrwertigen Alkoholen durch Kondensation.

Vorzugsweise werden Bernsteinsäure, Glutarsäure oder Adipinsäure verwendet bzw. entsprechende Dicarbonsäuregemische.

Auch araliphatische Dicarbonsäuren wie Ortho- oder Terephthalsäure bzw. ungesättigte Carbonsäuren wie Malein- und Fumarsäure sind verwendbar.

Mehrwertige Alkohole als Kondensationspartner liegen meist ebenfalls im Bereich von 2 bis 12 Kohlenstoffatomen.

Besonders bevorzugt werden hierbei zweiwertige (Glykole) aus der Reihe Ethylenglykol bis Hexandiol-1,6 sowie vor allem Diethylenglykol oder Dipropylenglykol.

Als höherfunktionelle verzweigend wirkende Alkohol-Komponenten werden oft kleine Mengen Glycerin, Trimethylpropan oder höherfunktionelle Homologe mitverwendet.

Bevorzugt werden aus Adipinsäure, Diethylenglykol und 2 bis 3 Gew.-% Trimethylolpropan hergestellte Polyesterpolyole wie beispielsweise VP PU60WB01 oder VP PU 60WB02 (Fogging-arm eingestellt, erhältlich bei Bayer AG) eingesetzt.

Anstelle hochethoxylierter difunktioneller oder trifunktioneller (z.B. PU41WB01) Polyetherdiole und analoger Produkte sind auch höherfunktionelle hochethoxylierte Polyetherpolyole einsetzbar.

Als Stabilisatoren werden üblicherweise moderne Silikonstabilisatoren auf Basis Polydimethylsiloxan, die zu einer feinzelligen und möglichst offenzelligen Schaumstoffstruktur führen, eingesetzt wie VP AI 3613 bzw. VP AI 3614 (Bayer AG) oder B 8300 und B 8301 (Goldschmidt AG).

Der Anteil hochethoxylierter Polyetherpolyole in der Polyolabmischung für die vorgesehene Anwendung kann zwischen ca. 2 und 50 % liegen, bezogen auf die Summe der OH-funktionellen Komponenten.

Ihre Funktionalität (bestimmt durch den Starter) liegt üblicherweise zwischen 2 und 6. Besonders bevorzugt werden trifunktionelle Komponenten.

Durch die Möglichkeit der Zumischung verschiedenartiger Polyesterpolyole zur Verschäumung lassen sich wichtige Schaumstoffeigenschaften im Sinne der beabsichtigten Anwendung einstellen.

So lassen sich durch Einsatz fogging-arm eingestellter Polyesterpolyole mit OH-Zahl 60 bzw. 52 auf Basis Adipinsäure, Diethylenglykol und Trimethylolpropan als Verzweigungskomponente, denen durch Kurzwegdestillation flüchtige, foggingaktive Bestandteile wie cyclische Diethylenglykolester entzogen wurden, die Forderungen der DIN 75201 problemlos erfüllen.

Im Vergleich von Schaumstoffen, die unter Verwendung eines fogging-armen Polyesterpolyols mit 3 Gew.-% Trimethylolpropan (VP PU60WB01) bzw. eines 2 Gew.-% Trimethylolpropan enthaltenden Polyesterpolyols (VP PU 60WB02) hergestellt wurden, zeigt letzterer zusätzlich das höhere Werteniveau von "Textilester-Schaumstoffen". Der Unterschied entspricht in etwa dem Eigenschaftsbild der fogging-verursachenden Schaumstoffe auf Basis der vergleichbar aufgebauten kommerziellen Polyesterpolyole (DE 2300 und DE 2200, Bayer AG).

Zur weiteren Verminderung des Foggingbeitrages können zur Katalyse der Verschäumungsreaktion neben den üblichen Aminkomponenten (vergleiche Kunststoff-Handbuch, Band VII, Carl Hanser-Verlag, München/Wien, 3. Auflage (1993), S. 104-107 bzw. S 219) vornehmlich solche eingesetzt werden, die wenig zum Geruch bzw. Fogging der resultierenden Schaumstoffe beitragen wie beispielsweise:

Dimethylpiperazin, Bis-(dimethylaminoethyl)-ether (Niax A 30 von OSI oder Dabco BL 11 von Air Products, jeweils Zubereitungen) bzw. Dimethylethanolamin und N, N, N-Trimethyl-N-hydroxyethyl-bisaminoethylether (Desmorapid KE 9645 der Rhein-Chemie) als einbaufähige Beispiele oder 1,2-Dimethylimidazol (Dabco 2039 von Air Products) ebenso wie verschiedenartige Abmischungen solcher Amine oder Harnstoff/Amin-Kombinationen.

Gegebenenfalls werden weitere Hilfs- und Zusatzmittel zugefügt zur Beeinflussung weiterer Eigenschaften, z.B. Flammschutzmittel, Emulgier- oder Dispergiermittel oder Hilfsmittel zur Verbesserung der Stanzfähigkeit oder Antioxidantien zur Verhinderung von Kernverfärbung.

Herstellbar sind hierbei die für Polyester-PUR-Schaumstoffe üblichen Rohdichten im Bereich von ca. 20 bis 80 kg/m³. Durch Mitverwendung zusätzlicher Treibmittel, z.B. mittels flüssigem Kohlendioxid nach der NovaFlex-Technik (Hennecke / Bayer AG) und verwandten Verfahren oder durch Unterdruck-Technik oder analogen Techniken sind Bereich und Anwendungsmöglichkeiten entsprechend erweiterbar. Bevorzugt wird indessen der Bereich der Vorgaben der Automobilindustrie von ca. 25 bis 45 kg/m³. Da einerseits das Wasseraufnahmevermögen mit steigender Rohdichte ansteigt, die Benetzungsfähigkeit (zugängliche innere Oberfläche des Schaumstoffs) andererseits vom Ausmaß der erzielten Offenzelligkeit des Schaumstoffs abhängt - und letztere normalerweise mit steigender Rohdichte sinkt - wird insbesondere der Bereich von 30 bis 40 kg/m³ bevorzugt

Die erfindungsgemäß verwendeten Schaumstoffe zeigen hydrophile Eigenschaften. Sie sind in der Lage, innerhalb 20 bis 25 Sekunden, bezogen auf das Schaumstoffgewicht, die ca. 10fache Menge an Wasser aufzunehmen. Beim Auflegen der trockenen Schaumstoffe auf eine Wasseroberfläche (ab ca. 10 % Polyether-Polyol-Anteil im Polyol-Gemisch) sinkt die Schaumstoffprobe innerhalb von Sekunden ein.

Bis zu einem Gehalt von ca. 30 % der beschriebenen speziellen Polyetherpolyole im Polyolgemisch geschieht dies ohne Quellen der Schaumstoffmatrix, was für einige Anwendungen durchaus wünschenswert ist.

Mit höherem Anteil an hochethoxyliertem Polyetherpolyol resultiert dann zusätzlich eine erkennbare Quellung der Schaumstoff-Matrix.

Die Polyester-PUR-Schaumstoffe als Bahnware können zur Herstellung von Schaumstoff-Textilverbundstoffen eingesetzt werden, die nach der Sandwichkaschierung, Klebe- oder Flammkaschierung hergestellt werden. Bevorzugt werden die Polyester-PUR-Schaumstoffe zur Herstellung flammkaschierter Textilverbundstoffe verwendet.

Als besonders vorteilhaft hat sich bei der erfindungsgemäßen Verwendung in der Flammkaschierung der Zusatz von kurzkettigen, meist linearen Glykolen oder Phosphor-haltigen organischen Verbindungen gezeigt, wodurch eine ausreichende Anfangs- und Endfestigkeit des Materialverbundes erreicht wird. Beispiele für derartige Zusatzmittel sind aliphatische Diole der allgemeinen Formel HO-(R-CH)ₙ-OH, wobei n eine ganze Zahl im Bereich 2 bis 15 sein kann und R eine Alkyl- oder Alkoxygruppe sein kann, sowie oligomere Polyoxypropylenglykole, Polyoxyethylenglykole, Propoxylierungs- und Ethoxylierungsprodukte von mehrwertigen Alkoholen oder aliphatische und aromatische Polyesterglykole im Molekulargewichtsbereich von 32 bis 700 bzw. OH-funktionelle Phosphor- oder Phosphorigsäure-Ester wie Levagard 4090 N (Bayer AG) oder Weston 430 (General Electric Spec. Chem.).

Als Polyisocyanate zur Herstellung der hydrophilen Polyester-PUR-Schaumstoffe können eingesetzt werden:

Aliphatische, cycloaliphatische, araliphatische, aromatische und heterocyclische Polyisocyanate, wie sie z.B. von W. Siefken in Justus Liebig Annalen der Chemie, 562, Seiten 75 bis 136, beschrieben werden, beispielsweise solche der Formel,

Q(NCO)ₙ,

in der
- n: 2 bis 4, vorzugsweise 2 bis 3, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten.
zB. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren, ("TDI"), Polyphenylpolymethylenpolyisocyanate, wie sie durch Anilin-Formaldehyd-Kondensation und anschließende Phosgenierung hergestellt werden ("MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Besonders bevorzugt sind die üblicherweise eingesetzten TDI-Isomerengemische T 80, T 65 und Mischungen hieraus.

Durch die in weiten Grenzen variierbare Zumischung der hochethoxylierten Polyetherpolyole und durch die Möglichkeit, verschiedenartige Polyesterpolyole zur Verschäumung einzusetzen, lassen sich die erwünschten Schaumstoffeigenschaften leicht einstellen.

So genügen bereits 5 % Polyetherpolyol mit hohem Ethoxylierungsgrad, um eine deutliche Steigerung des Wasseraufnahmevermögens zu erzielen. Dies bedeutet auf der anderen Seite noch weitgehenden Erhalt des Ausgangs-Werteniveaus entsprechender Polyester-PUR-Schaumstoffe. Die Erfindung wird durch die nachstehend aufgeführten Beispiele näher erläutert. Die Zahlenangaben in den Rezepturen sind als Gewichtsteile zu verstehen - bezogen auf 100 Gew.-Teile Polyol.

### Beispiele

### Herstellung der Schaumstoffe

Die Reaktionskomponenten werden nach bekannten und üblichen Verfahren zur Reaktion gebracht, wobei man sich üblicherweise maschineller Einrichtungen bedient.

Einzelheiten über Verarbeitungseinrichtungen, die erfindungsgemäß in Frage kommen, werden z.B. im Kunststoff-Handbuch, Band VII, Carl Hansel-Verlag, München/Wien, 3. Auflage, 1993, auf den Seiten 193-220 beschrieben.

Die Komponenten werden gemäß den angegebenen Rezepturen intensiv miteinander vermischt und zur Umsetzung gebracht.

### Beispiel 1

- 90 Gew.-Teile: Fogging-armes Polyesterpolyol aus Adipinsäure, Diethylenglykol und 3 Gew.-% Trimethylolpropan mit OHZ: 60 (VP PU 60 WB 01, Bayer AG)
- 10 Gew.-Teile: auf Glycerin gestartetes Polyetherpolyol, trifunktionell, Ethoxylierungsgrad ≥70 %, OHZ: 37 (VP PU 41 WB 01, Bayer AG)
- 3,0 Gew.-Teile: Wasser
- 1,5 Gew.-Teile: VP AI 3613 (Silikonstabilisator, Bayer AG)
- 0,2 Gew.-Teile: Niax A 30 (Aminaktivator, OSI)
- 0,2 Gew.-Teile: RC-A 117 (Aminaktivator, Rhein Chemie)
- 19,0 Gew.-Teile: Toluylendiisocyanat T 80 (Isomerenverhältnis 2,4/2,6 = 80/20 Gew.-%)
- 19,0 Gew.-Teile: Toluylendiisocyanat T 65 (Isomerenverhältnis 2,4/2,6 = 65/35 Gew.-%

Die Flammkaschierung von 7 mm Bahnenware des Beispiels 1 mit Polyester-Flachgewebe (Automobilqualität) ergab Schälfestigkeitswerte gemäß DIN 53 357 von 9 bis 11 N/5 cm nach 24 Stunden.

### Beispiel 2

- 85 Gew.-Teile: Fogging-armes Polyesterpolyol aus Adipinsäure, Diethylenglykol und 3 Gew.-% Trimethylolpropan, OHZ: 60 (VP PU 60 WB 01, Bayer AG)
- 10 Gew.-Teile: auf Glycerin gestartetes trifunktionelles Polyetherpolyol. Ethoxylierungsgrad ≥70 %, OHZ: 37 (VP PU 41 WB 01, Bayer AG)
- 5 Gew.-Teile: ethoxyliertes Bisphenol A, OHZ: 270 bis 285 (Dianol 240/1, Akzo-Chemie)
- 3 Gew.-Teile: Wasser
- 0,2 Gew.-Teile: Niax A 30 (Aminaktivator, OSI)
- 0,2 Gew.-Teile: RC-A 117 (Aminaktivator, Rhein-Chemie)
- 1,5 Gew.-Teile: VP AI 3613 (Silikonstabilisator, Bayer AG)
- 19,7 Gew.-Teile: Toluylendiisocyanat T 80 (Isomerenverhältnis 2,4/2,6 = 80/20 Gew.-%)
- 19,7 Gew.-Teile: Toluylendiisocyanat T 65 (Isomerenverhältnis 2,4/2,6 = 65/35 Gew.-%)

Nach Flammkaschierung von 7 mm Bahnenware des Beispiels 2 mit dem Polyester-Flachgewebes des Beispiels 1 ergaben sich Schälfestigkeitswerte von 13 bis 15 N/5 cm (DIN 53357, 24 h).

### Beispiele 3 bis 6

| | | | | | |
|---|---|---|---|---|---|
| VP PU 60 WB 02 | Gew.-Teile | 80 | 80 | 80 | 60 |
| VP PU 41 WB 01 | Gew.-Teile | | | | 35 |
| L 5050 ¹⁾ | Gew.-Teile | 20 | 15 | 15 | |
| Weston 430 ²⁾ | Gew.-Teile | | | 5 | 5 |
| Stepanpol PS 3152 ³⁾ | Gew.-Teile | | 5 | | |
| Wasser | Gew.-Teile | 3 | 3 | 3 | 3 |
| VP PU AI 3613 ⁴⁾ | Gew.-Teile | 1,5 | | 1,5 | 1,5 |
| B 8301 ⁵⁾ | Gew.-Teile | | 1,5 | | |
| Niax A 30 ⁶⁾ | Gew.-Teile | 0,2 | 0,2 | 0,2 | 0,2 |
| RC A 117 ⁷⁾ | Gew.-Teile | 0,2 | 0,2 | 0,2 | 0,2 |
| T 80 | Gew.-Teile | 18,5 | 19,4 | 19,8 | 12,9 |
| T 65 | Gew.-Teile | 18,5 | 19,4 | 19,8 | 25,8 |

| | | | | | |
|---|---|---|---|---|---|
| ¹⁾ Difunktionelles Polyetherpolyol auf Basis Propylenglykol, OHZ: 57, Ethoxylierungsgrad: ≥49 % | | | | | |
| ²⁾ Tris(dipropylenglykol)phosphit, Phosphor-haltiges Zusatzmittel, OHZ:395, General electric Spec. Chem. | | | | | |
| ³⁾ Kurzkettiges aromatisches Polyesterpolyol, OHZ: 300-330, Fa. Stepan Illinois/USA | | | | | |
| ⁴⁾ Silikonstabilisator, Bayer AG | | | | | |
| ⁵⁾ Silikonstabilisator, Th. Goldschmidt AG | | | | | |
| ⁶⁾ Aminaktivator, Fa. OSI | | | | | |
| ⁷⁾ Aminaktivator, Fa. Rhein-Chemie | | | | | |

### Bestimmung der Hydrophilie

Zur Bestimmung der Hydrophilie wurden die in den Beispielen aufgeführten Schaumstoffe in anwendungsspezifischen Simulationstest gegen einen Fogging-arm eingestellten Standardesterschaumstoff geprüft. Die Rezeptur dieses Standardschaumstoffes sah dabei folgendermaßen aus:
- 100 Gew.-Teile: Fogging-armes Polyesterpolyol aus Adipinsäure, Diethylenglykol und 2 Gew.-% Trimethylolpropan (VP PU 60WB02, Bayer AG)
- 3,0 Gew.-Teile: Wasser
- 1,0 Gew.-Teile: VP-AI 3613
- 0,2 Gew.-Teile: Niax A 30
- 0,2 Gew.-Teile: RC A117
- 18,4 Gew.-Teile: Toluylendiisocyanat T 80
- 18,4 Gew.-Teile: Toluylendiisocyanat T 65

Die Tests wurden wie folgt durchgeführt:
1. Die Schaumstoffe wurden trocken auf eine Wasseroberfläche gelegt, wobei der hydrophile gemäß den Beispielen 1 bis 6 hergestellte Schaumstoff innerhalb von 25 Sek. komplett im Wasser einsank. Der Standardschaumstoff schwamm dagegen mehr als 1 Stunde auf der Wasseroberfläche. Wurden dagegen feuchte Schaumstoffe, aus denen das Wasser weitgehend entfernt wurde, auf die Wasseroberfläche gesetzt, sank der hydrophile Schaumstoff innerhalb von 2 Sek. ein; der Standardschaumstoff schwamm dagegen weiterhin mehr als 1 Stunde auf dem Wasser.
2. Auf eine trockene Schaumstoff-Fläche wurde mittels einer Spritzflasche Wasser aufgetragen; der hydrophil eingestellte erfindungsgemäße Schaumstoff saugte die Wassertropfen direkt auf. Bei dem Standardschaumstoff blieben die Wassertropfen in der aufgetragenen Form als Kugeln auf der Oberfläche liegen.

## Patentansprüche

1. Verwendung hydrophiler Polyester-Polyurethan-Schaumstoffe aus der Umsetzung von
a) Polyisocyanaten mit
b) mindestens zwei Hydroxylgruppen aufweisenden Polyesterpolyolen mit einem mittleren Molekulargewicht im Bereich von 700 bis 10 000 und
c) mindestens zwei Hydroxylgruppen aufweisenden ethoxylierten Polyetherpolyolen mit einem Ethoxylierungsgrad von über 30 Gew.-% und einer Funktionalität im Bereich von 2 bis 6 und
d) gegebenenfalls mindestens zwei aktive Wasserstoffatome aufweisende Verbindungen mit einem mittleren Molekulargewicht im Bereich von 32 bis 700 sowie
e) Katalysatoren, Wasser und/oder Treibmitteln und
f) gegebenenfalls Hilfs- und Zusatzstoffen
in Kombination mit linearen Glykolen und/oder Phosphor-haltigen Verbindungen als Zusatzmittel bei der Herstellung flammkaschierte Textil-Schaumstoff-Verbundstoffe.

2. Verwendung nach Anspruch 1, **dadurch gekennzeichnet, dass** der Ethoxylierungsgrad der Polyetherpolyole zwischen 50 und 95 Gew.-% liegt.

3. Verwendung nach einem der Ansprüche 1 bis 2, **dadurch gekennzeichnet, dass** 2 bis 50 Gew.-% hoch-ethoxylierter Polyetherpolyole, bezogen auf die Summe der Komponenten b) bis d), eingesetzt werden.

## Claims

1. Use of hydrophilic polyester-polyurethane foams from the reaction of
a) polyisocyanates with
b) polyesterpolyols containing at least two hydroxyl groups with an average molecular weight in the range 700 to 10 000 and
c) ethoxylated polyetherpolyols containing at least two hydroxyl groups with a degree of ethoxylation of more than 30 wt.% and a functionality in the range 2 to 6 and
d) optionally compounds containing at least two active hydrogen atoms with an average molecular weight in the range 32 to 700 as well as
e) catalysts, water and/or blowing agents and
f) optionally auxiliary substances and additives
in combination with linear glycols and/or phosphorus-containing compounds as additives during the production of flame-laminated textile/foam composite materials.

2. Use according to claim 1, **characterised in that** the degree of ethoxylation of the polyetherpolyols is between 50 and 95 wt.%.

3. Use according to one of claims 1 to 2, **characterised in that** 2 to 50 wt.%, with respect to the sum of components b) to d), of highly ethoxylated polyetherpolyols is used.

## Revendications

1. Utilisation de mousses de polyester-polyuréthane hydrophiles, obtenues par réaction
a) de polyisocyanates avec
b) des polyesterpolyols contenant au moins deux groupes hydroxyle et ayant une masse molaire moyenne de 700 à 10 000 et
c) des polyétherpolyols éthoxylés contenant au moins deux groupes hydroxyle et ayant un degré d'éthoxylation de plus de 30 % en masse et une fonctionnalité dans l'intervalle de 2 à 6 et
d) éventuellement des composés ayant au moins deux atomes d'hydrogène actif et ayant une masse molaire moyenne dans l'intervalle de 32 à 700, ainsi que
e) des catalyseurs, de l'eau et/ou des gonflants et
f) éventuellement des agents auxiliaires et des additifs,
en combinaison avec des glycols linéaires et/ou des composés contenant du phosphore comme additifs, dans la préparation de tissus doublés de mousse obtenus par doublage à la flamme.

2. Utilisation selon la revendication 1, **caractérisée en ce que** le degré d'éthoxylation des polyétherpolyols est compris entre 50 et 95 % en masse.

3. Utilisation selon l'une des revendications 1 à 2, **caractérisée en ce que** l'on utilise 2 à 50 % en masse de polyétherpolyols à degré d'éthoxylation élevé, par rapport à la somme des constituants b) à d).
